# FASCICULE DE BREVET EUROPEEN

(11) **EP 0 816 126 B1**
(45) Date de publication et mention de la délivrance du brevet: **10.10.2001**
(21) Numéro de dépôt: 97401541.4
(22) Date de dépôt: 01.07.1997
(51) Int. Cl.: B60B 17/00

(54) **Procédé d'insonorisation d'une roue de chemin de fer et roue de chemin de fer insonorisée**
Schalldämpfungsverfahren eines Schienenrades und schallgedämpftes Schienenrad
Method for sound-damping of a railway wheel and sound damped railway wheel

(30) Priorité: 03.07.1996 FR 9608289
(43) Date de publication de la demande: 07.01.1998
(73) Titulaire: VALDUNES, 92800 Puteaux (FR)
(72) Inventeur: Broucke, Jacques, 59210 Coudekerque-Branche (FR); Coblentz, Arnaud, 59492 Hoymille (FR); Demilly, François, 59240 Dunkerque (FR)
(74) Mandataire: Bouget, Lucien

(56) Documents cités:
- EP-A- 0 047 385
- EP-A- 0 689 944
- DE-C- 854 367
- FR-A- 2 389 499
- GB-A- 2 021 501

## Description

L'invention concerne un procédé d'insonorisation d'une roue de chemin de fer et une roue de chemin de fer insonorisée.

Sous l'effet des efforts engendrés par le roulement sur un rail, les roues de chemin de fer entrent en vibration et émettent des bruits qui peuvent être intenses et qui créent des nuisances pour les riverains des lignes de chemin de fer.

Pour remédier à ces inconvénients, on a proposé d'utiliser des dispositifs amortisseurs fixés sur les roues et assurant l'absorption des vibrations génératrices de bruits. On a par exemple proposé d'insérer, dans les jantes des roues, des pièces généralement de forme annulaire, appelées joncs, en un matériau absorbant les vibrations des roues. On a également proposé de monter sur les roues des amortisseurs constitués par un empilement de pièces en tôle fine séparées par des couches de matériau viscoélastique. Ces dispositifs ne sont efficaces, pour atténuer les bruits engendrés par les roues, que dans une gamme de fréquences étroite et située généralement vers les hautes fréquences, ces fréquences correspondant aux bruits de crissement des roues (voir FR-A-2.389.499) qui décrit un procédé selon le préambule de la revendication 1. Une roue ayant les caractéristiques du préambule de la revendication 8 est décrit dans le document DE-C-914 824.

II existe donc un besoin non satisfait, en ce qui concerne l'atténuation des bruits émis, lors du roulement d'une roue de chemin de fer sur un rail, dans une large bande de fréquences correspondant non seulement aux crissements mais également aux autres bruits de roulement de la roue de chemin de fer. Ces besoins sont ressentis, aussi bien en ce qui concerne les roues des trains à grande vitesse que les roues de wagons de transport de fret qui sont amenés assez souvent à circuler la nuit dans des zones habitées.

Le but de l'invention est donc de proposer un procédé d'insonorisation d'une roue de chemin de fer du type comprenant une jante de roulement sur un rail, une toile et un moyeu, permettant d'atténuer les bruits de roulement de la roue dans une large bande de fréquences et en particulier dans une bande de fréquences sensiblement plus basse que la bande de fréquences des vibrations dont les dispositifs d'insonorisation connus de l'art antérieur assurent l'atténuation.

Dans ce but :
- on définit par le calcul ou par des essais, au moins un mode de vibration propre de la roue, soit dans une direction radiale, soit dans la direction axiale de la roue et on détermine la fréquence de résonance de la roue pour ce mode de vibration défini,
- dans le cas d'un mode de vibration axial, on détermine de plus le diamètre d'au moins un cercle centré sur l'axe de la roue sur lequel sont répartis des ventres de vibrations, et
- on fixe sur la roue au moins un élément vibrant, appelé batteur dynamique, constitué d'une masse active d'une valeur significative par rapport à la masse d'une partie au moins de la roue à laquelle est associé le batteur dynamique, relié à la roue par l'intermédiaire d'un élément élastique, le batteur dynamique ayant une fréquence propre de vibration égale à la fréquence de résonance de la roue pour le mode de vibration défini et étant fixé sur la roue pour vibrer dans un mode identique au mode de vibration défini de la roue.

L'invention est également relative à une roue de chemin de fer insonorisée selon la revendication 8.

Afin de bien faire comprendre l'invention, on va maintenant décrire, à titre d'exemple non limitatif, en se référant aux figures jointes en annexe, une roue de chemin de fer, l'application du procédé suivant l'invention à l'insonorisation de cette roue ainsi que les éléments vibrants utilisés pour l'insonorisation de la roue et leur montage sur une partie d'une roue de chemin de fer.

La figure 1 est une vue en coupe axiale d'une roue de chemin de fer d'un type connu.

La figure 2 est une vue en coupe axiale partielle d'une roue de chemin de fer sur laquelle sont fixés des batteurs dynamiques pour l'atténuation des vibrations dans un mode radial.

La figure 3 est une vue en élévation d'une roue de chemin de fer suivant 3 de la figure 2.

La figure 4 est une vue en coupe axiale partielle d'une roue de chemin de fer comportant des moyens d'atténuation de vibration dans un mode radial, suivant une variante du mode de réalisation représenté sur les figures 2 et 3.

La figure 5 est une vue en élévation d'une roue de chemin de fer comportant des batteurs dynamiques pour l'atténuation de vibration dans un mode axial.

La figure 6 est une vue en élévation d'une roue de chemin de fer selon une variante de la figure 5.

La figure 7 est une vue partielle en coupe axiale, suivant 7-7 de la figure 5 ou de la figure 6, de la roue de chemin de fer comportant des moyens d'atténuation de vibration dans un mode axial.

La figure 8 est une vue partielle en coupe axiale d'une variante de réalisation de la roue de chemin de fer insonorisée par atténuation de vibrations axiales.

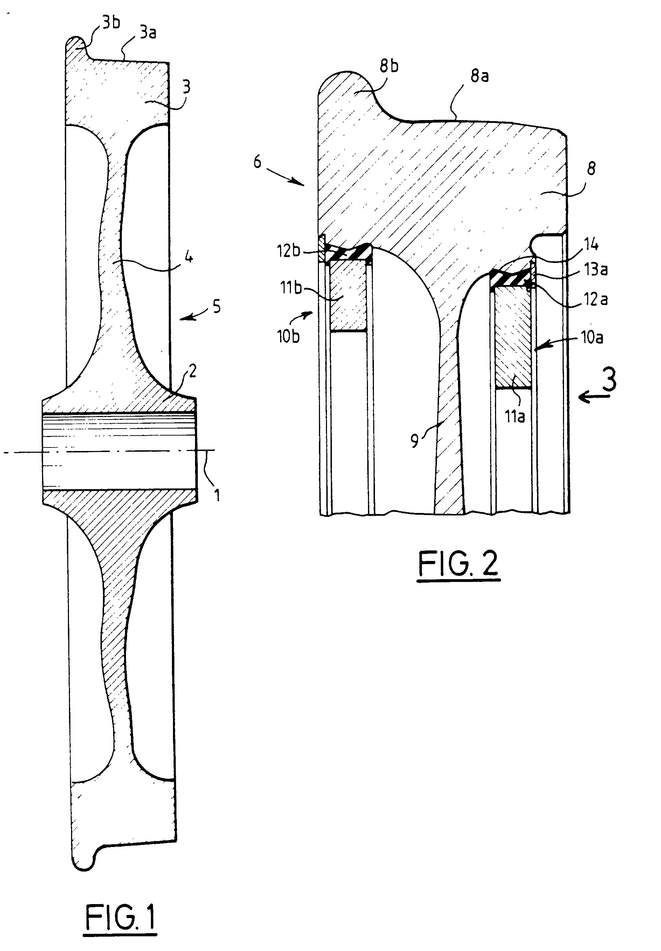

Sur la figure 1, on a représenté une section méridienne d'une roue de chemin de fer de type classique ayant un axe de roulement et de symétrie 1 et comportant un moyeu 2 dont l'alésage intérieur a pour axe l'axe 1 de la roue, une jante 3 de forme annulaire et une toile 4 en forme de disque reliant le moyeu 2 et la jante 3. La jante 3 comporte une surface de roulement 3a destinée à venir en contact avec le rail et un boudin 3b annulaire destiné à venir dans une position latérale interne par rapport au rail.

La roue de chemin de fer désignée de manière générale par le repère 5 présente une forme et des dimensions qui sont définies, lors de la conception de la roue, d'une manière à optimiser le comportement mécanique et dynamique de'la roue en service.

Une roue de chemin de fer de caractéristiques géométriques et dimensionnelles définies présente des caractéristiques de vibration propres qui peuvent être analysées et déterminées, soit par le calcul, soit encore par des essais et des mesures effectuées sur la roue de chemin de fer.

De telles méthodes de calculs, d'essais et de mesures sont bien connus de l'homme du métier. Ces calculs ou essais permettent en particulier de réaliser une analyse en fréquence des modes de vibration propres de la roue dans les directions axiales, c'est-à-dire parallèles à l'axe 1 de la roue et dans des directions radiales perpendiculaires à la direction axiale.

L'analyse en fréquence des vibrations permet en particulier de déterminer les fréquences de résonance de la roue pour chacun des modes de vibration axial et radial.

Le procédé d'insonorisation suivant l'invention utilise, de manière nouvelle, l'analyse des vibrations propres de la roue de chemin de fer pour réaliser une insonorisation de la roue. Cette analyse permet de définir en particulier, au moins un mode de vibration propre de la roue, soit dans la direction axiale, soit dans la direction radiale et de déterminer au moins une fréquence de résonance de la roue pour le mode de vibration défini.

Dans le cas où le mode de vibration est un mode de vibration axial, on détermine de plus le diamètre d'au moins un cercle centré sur l'axe de la roue sur lequel sont répartis des maxima ou ventres des vibrations, le diamètre de ce cercle étant appelé diamètre nodal.

On détermine plus généralement plusieurs diamètres nodaux correspondant à plusieurs fréquences de résonance de la roue dans le mode axial.

L'insonorisation de la roue par le procédé suivant l'invention est réalisée en fixant un ou plusieurs éléments vibrants, appelés batteurs dynamiques, sur une partie de la roue de chemin de fer, en fonction du ou des modes de vibrations dont on réalise l'atténuation. Les parties de la roue de chemin de fer sur laquelle sont fixés le ou les batteurs dynamiques peuvent être définies par des impératifs techniques. C'est ainsi que dans le cas des roues pour trains à grande ou très grande vitesse, il est difficilement concevable de fixer des batteurs dynamiques sur la toile de la roue, dans la mesure où cette pose de batteurs dynamiques supposerait un perçage de la toile. Dans le cas des voitures de trains à grande ou à très grande vitesse, l'optimisation de la roue en ce qui concerne sa masse et son équilibrage interdit d'envisager un perçage de la toile. Dans ce cas, de préférence, les batteurs dynamiques sont fixés sur la jante de la roue.

En revanche, dans le cas de roues de wagons de transport de fret dont le freinage est réalisé par le contact de sabots avec les jantes des roues, il peut être préférable d'éviter de fixer des batteurs dynamiques sur la jante qui peut s'échauffer lors du freinage et détruire le matériau élastique ou viscoélastique des batteurs dynamiques fixés sur la roue.

Les caractéristiques du batteur dynamique nécessaire pour atténuer les vibrations de la roue sont déterminées à partir de l'analyse en fréquence des vibrations et la fréquence de vibration propre du batteur dynamique est réglée à une valeur sensiblement égale à la fréquence des vibrations dont on veut réaliser l'atténuation.

On va maintenant décrire, en se référant aux figures 2 à 8, plusieurs modes de réalisation de roues de chemin de fer insonorisées par le procédé suivant l'invention.

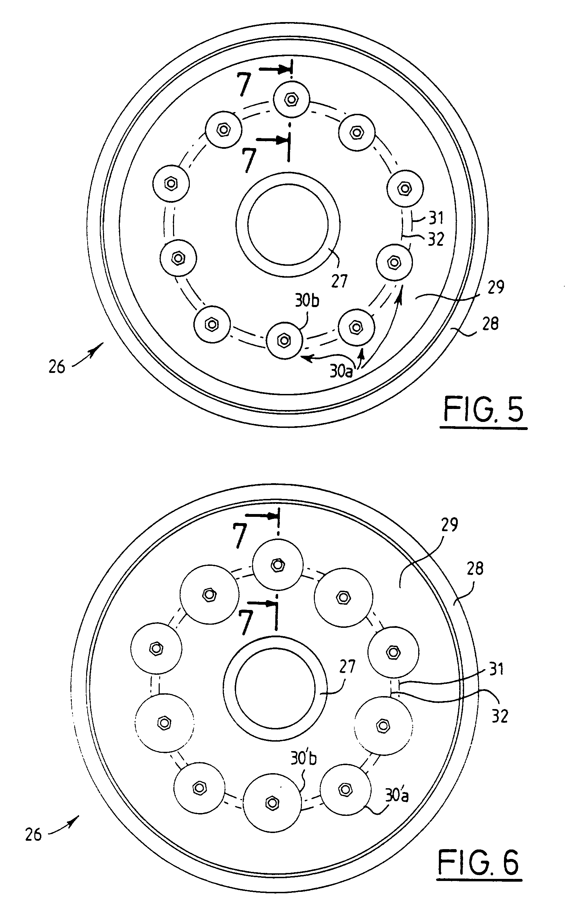

Dans le cas des modes de réalisation représentés sur les figures 2, 3 et 4, on réalise l'atténuation de vibrations dans un mode radial alors que dans les modes de réalisation représentés sur les figures 5, 6, 7 et 8, on réalise l'atténuation de vibrations dans un mode axial.

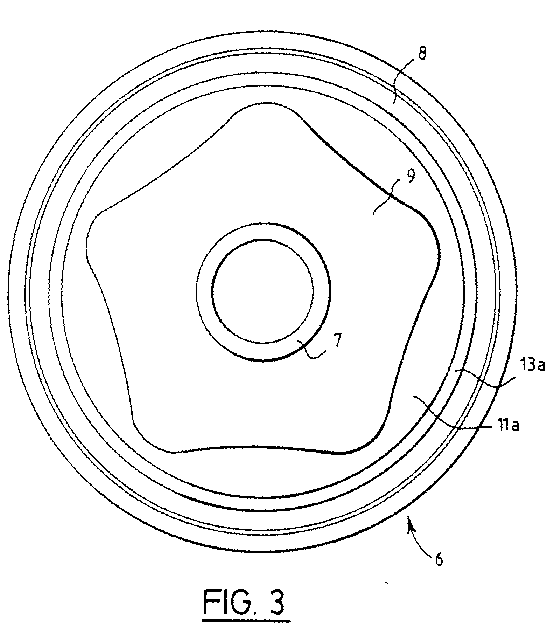

Sur les figures 2 et 3, on a représenté une roue de chemin de fer désignée de manière générale par le repère 6 qui comporte un moyeu 7, une jante 8 et une toile 9 reliant le moyeu à la jante.

La jante 8 comporte de manière habituelle une surface de roulement 8a et un boudin 8b sur son côté interne.

La roue 6 peut être par exemple une roue d'une voiture d'un train à très grande vitesse pour laquelle on a effectué par le calcul ou par des essais une analyse des modes de vibrations propres de la roue afin de réaliser une atténuation d'un mode de vibration qui est le mode de vibration radial.

Selon l'invention, l'atténuation des vibrations en mode radial est réalisée en fixant sur la surface interne de la jante 8 dirigée vers l'axe de la roue, du côté externe et du côté interne respectivement de la roue, deux batteurs dynamiques 10a et 10b.

Les batteurs dynamiques 10a et 10b disposés de part et d'autre de la toile 9 de la roue sont réalisés de la même manière et comportent les mêmes éléments constitutifs. Toutefois, la masse active et la raideur de l'élément élastique des deux batteurs peuvent être différentes, de façon à pouvoir amortir deux fréquences caractéristiques de la roue.

On ne décrira que le batteur dynamique externe 10a situé du côté externe de la roue.

Le batteur dynamique 10a comporte une masse active 11a constituée par une pièce en acier de forme générale annulaire et un élément élastique 12a par l'intermédiaire duquel la masse active 11a est fixée sur la roue, contre la surface interne de la jante 8.

Comme il est visible sur la figure 3, la pièce annulaire 11a en acier constituant la masse active du batteur dynamique 10a comporte une surface interne dont la section par un plan perpendiculaire à l'axe de la roue présente la forme d'un pentagone à angles arrondis. De cette manière, la masse active est répartie suivant cinq zones périphériques de la jante, de manière régulière autour de l'axe de la roue. Ainsi, on ne modifie pas l'équilibrage de la roue et on évite, lors du roulement, une mise en vibration de l'élément vibrant constitué par le batteur dynamique, en phase avec la jante de la roue qui se déforme de façon symétrique et donc avec un nombre pair de déformées.

De manière plus générale, la pièce annulaire constituant la masse active du batteur dynamique comportera un bord externe circulaire et un bord interne présentant des ondulations suivant sa périphérie dirigées dans le sens radial, de manière à délimiter un nombre impair de lobes répartis régulièrement suivant la circonférence de la masse active et dirigés vers l'axe de la roue.

Chacun des lobes de la pièce annulaire 11a doit présenter une masse significative par rapport à la masse de la roue comprise dans l'angle dièdre ayant pour arête l'axe de la roue et délimitant le lobe considéré. Il est équivalent de dire que la masse totale de l'anneau 11a doit représenter une proportion significative de la masse totale de la roue.

Pour faciliter l'usinage de la masse active, celle-ci peut être constituée par une pièce annulaire ayant des découpes de direction radiale délimitant des. secteurs équivalents aux lobes décrits plus haut.

Dans le cas d'une roue pour une voiture d'un train à très grande vitesse, la masse totale de l'anneau 11a constituant la masse active doit être comprise entre 10 et 20 kg pour assurer une atténuation satisfaisante des bruits de la roue dus aux vibrations radiales.

Il est bien évident que la seconde masse active 11b du second batteur dynamique 10b doit présenter également une masse significative comprise entre 10 et 20 kg de sorte que le total des masses actives des batteurs dynamiques représente une proportion significative de la masse totale de la roue, cette proportion pouvant être comprise par exemple entre 5 et 10 % de la masse de l'ensemble de la toile et de la jante de la roue, le moyeu n'ayant pas d'influence sur l'émission acoustique.

Il s'agit là d'une différence importante par rapport aux dispositifs selon l'art antérieur constitués par des joncs ou des empilements de pièces en tôle mince dont la masse était tout-à-fait négligeable par rapport à la masse de la roue et qui assurait une certaine insonorisation de la roue par absorption des vibrations.

L'élément élastique ou viscoélastique 12a est constitué sous la forme d'un anneau profilé qui est engagé par sa surface externe dans une cavité 14 usinée sur la surface interne de la jante 8.

Les surfaces profilées de l'anneau viscoélastique 12a et de la cavité 14 de la jante présentent des surfaces inclinées assurant une fixation par serrage de l'anneau viscoélastique 12a, lorsqu'on engage une clé de serrage 13a de forme annulaire dans une cavité annulaire usinée sur la surface interne de la jante 8. La clé de serrage 13a peut être maintenue en place dans la jante par engagement en force ou par une fixation mécanique.

La liaison entre l'anneau viscoélastique 12a, généralement en caoutchouc, et la partie externe circulaire de la pièce annulaire 11a est assurée par serrage ou éventuellement par collage de l'anneau en caoutchouc 12a à la périphérie de la pièce annulaire 11a.

Bien entendu, le montage du batteur dynamique 10b à la partie interne de la roue est réalisé de la même manière que le montage du batteur dynamique 10a.

On a déterminé, lors de la phase initiale de mise en oeuvre du procédé, les fréquences propres de vibrations de la roue dans le mode radial.

Les batteurs dynamiques 10a et 10b sont réalisés et ajustés de manière que leur fréquence propre de vibration soit égale à l'une au moins des fréquences propres de vibrations de la roue dans le mode radial.

L'ajustage des batteurs se fait en optimisant les paramètres de raideur et d'amortissement de l'élément viscoélastique et la masse active.

Il est possible d'accorder les deux batteurs dynamiques 10a et 10b sur une même fréquence ou au contraire sur deux fréquences différentes correspondant à des fréquences propres de vibration différentes de la roue dans le sens radial.

Lors du roulement de la roue sur un rail, les vibrations sont transmises par la jante 8 aux batteurs dynamiques 10a et 10b qui entrent en vibration à une fréquence propre de la roue et qui s'accordent en opposition de phase avec les vibrations de la roue. On obtient ainsi une atténuation des vibrations de la roue et donc des bruits liés à ces vibrations radiales. La mise en vibration des batteurs dynamiques ne crée pas de bruit parasite d'une intensité notable.

Le procédé et le dispositif suivant l'invention permettent d'obtenir dans le cas des trains circulant à grande vitesse (200 km/h) et à très grande vitesse (300 à 350 km/h) une réduction des bruits de roulement de l'ordre de 5 à 10 dB(A).

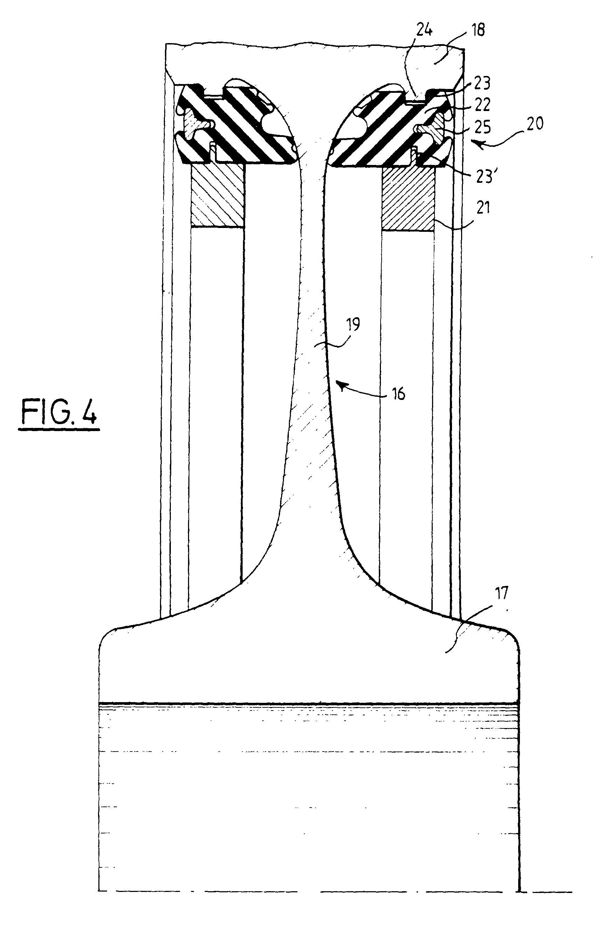

Sur la figure 4, on a représenté une variante de réalisation d'une roue de chemin de fer 16 comportant un moyeu 17, une jante 18 et une toile 19 reliant le moyeu à la jante. Le dessin de la roue représentée sur la figure 4 correspond à la forme d'une roue pour train à très grande vitesse.

Selon l'invention, après avoir déterminé les fréquences propres radiales de vibrations de la roue, on fixe au moins un batteur dynamique 20 sur la surface interne de la jante 18, le batteur dynamique 20 comportant une masse active annulaire 21 et un anneau viscoélastique, généralement en caoutchouc 22 assurant la liaison entre la roue 6 et la masse active 21.

L'anneau en caoutchouc 22 présente une section méridienne de forme complexe qui est représentée sur la figure 4. Sur sa surface externe, l'anneau en caoutchouc 22 comporte une première gorge annulaire 23 dans laquelle vient s'engager en position de service, une nervure annulaire 24 usinée dans la surface interne de la jante 18.

L'anneau en caoutchouc 22 comporte de plus, sur sa surface interne, une seconde gorge 23' dans laquelle vient s'engager un flasque annulaire de faible épaisseur constituant la partie externe de la masse active 21 du batteur dynamique 20.

De plus, l'anneau 22 comporte sur sa face latérale dirigée vers l'extérieur de la roue, une gorge profilée dans laquelle est engagée, pour assurer la fixation de l'élément annulaire 22 en caoutchouc sur la jante de la roue et la fixation de la masse active 21 sur l'élément annulaire en caoutchouc, une pièce de serrage annulaire 26 présentant une section sensiblement en forme de T à angles arrondis.

La pièce de serrage 26 de forme annulaire est engagée en force dans la gorge de la pièce annulaire 22 en caoutchouc, entre deux lèvres en vis-à-vis constituant les bords externes de la gorge.

L'engagement de la pièce 26 produit une déformation de la pièce annulaire en caoutchouc 22 et un serrage de la nervure 24 et de la partie de fixation de la masse active, respectivement à l'intérieur des gorges 23 et 23' de l'anneau en caoutchouc.

La face latérale de l'anneau en caoutchouc située vers l'intérieur de la roue comporte des lèvres qui viennent en appui avec une certaine pression contre la surface inférieure de la jante 18 et contre la partie supérieure du voile 19.

La masse active 21 pourrait également être fixée sur l'anneau en caoutchouc 22 par collage.

La partie de la masse active de forme annulaire située à l'extérieur de l'anneau de fixation 22 en caoutchouc est séparée en lobes successifs suivant sa périphérie par des encoches de direction radiale s'étendant suivant toute l'épaisseur de l'anneau constituant la masse active 21, dans le sens axial.

Bien entendu, comme précédemment, la fréquence propre du batteur 20 est réglée de manière que cette fréquence corresponde à une fréquence de vibration radiale de la roue 6. Il est possible bien entendu, de placer deux batteurs dynamiques contre la jante de la roue de part et d'autre de la toile 19. Comme précédemment, les masses actives peuvent avoir une valeur significative par rapport à la masse totale de la roue, cette valeur étant généralement comprise entre 5 et 10 % de la masse de la toile et de la jante de la roue. On obtient une atténuation des bruits de la roue de l'ordre de 5 à 10 dB(A).

Sur les figures 5 et 6, on a représenté une roue de chemin de fer 26 qui comporte, de manière habituelle, un moyeu 27, une jante 28 et une toile 29 reliant le moyeu à la jante.

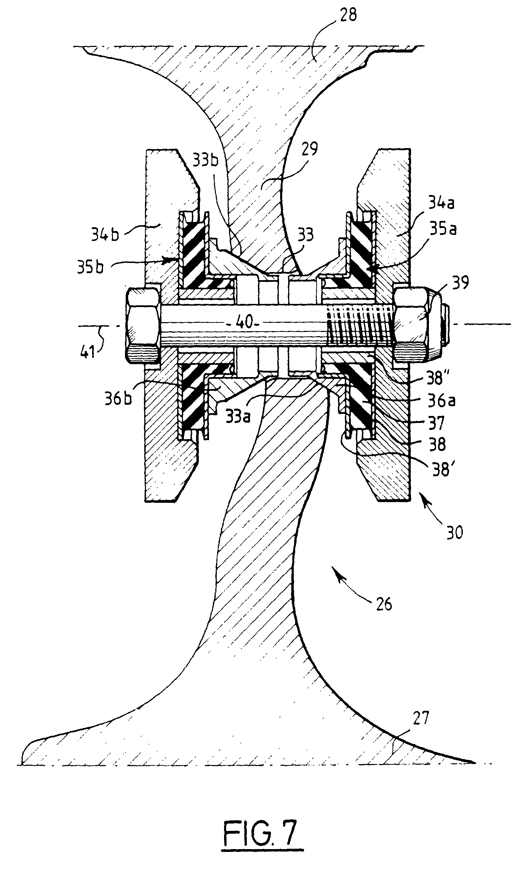

Sur la figure 7, on voit que la toile 29 de la roue 26 présente en section méridienne une certaine courbure.

La roue 26 qui peut être par exemple une roue de wagon pour le transport de fret a fait l'objet, lors d'une première phase de mise en oeuvre du procédé suivant l'invention, d'une analyse des vibrations propres de la roue. On a défini un mode de vibration axial dont on veut réaliser l'atténuation pour limiter les bruits de roulement de la roue.

On a déterminé en particulier les fréquences de vibrations propres de la roue dans le mode axial et on a déterminé de plus les diamètres nodaux correspondant à deux fréquences de vibrations axiales de la roue, c'est-à-dire les diamètres de deux cercles 31 et 32 sur lesquels sont situés les ventres de vibrations dans le mode axial, à la première et à la seconde fréquences de vibration.

Pour réaliser l'insonorisation de la roue 26, on réalise l'atténuation des vibrations dans la direction axiale de la roue à la première et à la seconde fréquences en fixant sur la toile 29 de la roue des batteurs dynamiques.

Dans le mode de réalisation représenté sur la figure 5, les batteurs dynamiques destinés à l'atténuation de la première et de la seconde fréquences sont identiques alors que dans le cas du mode de réalisation représenté sur la figure 6, les batteurs dynamiques utilisés pour l'atténuation de la seconde fréquence présentent une masse active plus importante que les batteurs dynamiques permettant d'atténuer la première fréquence.

Dans le cas du premier mode de réalisation représenté sur la figure 5, les batteurs dynamiques 30a, utilisés pour l'atténuation de la première fréquence, sont fixés sur la toile 29 de la roue dans des positions régulièrement réparties sur le cercle 31 dont le diamètre nodal correspond à la première fréquence. Les batteurs dynamiques 30b, utilisés pour l'atténuation de la seconde fréquence, sont régulièrement répartis sur la circonférence du cercle 32 dont le diamètre correspond au diamètre nodal pour la seconde fréquence de vibration.

On utilise cinq batteurs 30a et cinq batteurs 30b, deux batteurs dynamiques successifs étant situés sur deux rayons de la toile 29 faisant entre eux un angle de 36°.

Dans le cas du mode de réalisation représenté sur la figure 6, les batteurs dynamiques 30'a et 30'b dont les masses actives sont différentes se trouvent placés dans des dispositions identiques aux batteurs dynamiques 30a et 30b du mode de réalisation représenté sur la figure 5. Ce mode de réalisation permet d'adapter les caractéristiques des batteurs dynamiques aux deux fréquences de vibrations du mode axial.

Comme il est visible sur la figure 7, les batteurs dynamiques tels que le batteur 30 représenté à titre d'exemple, comportent deux parties situées de part et d'autre de la toile 29 et sont fixés sur la toile 29, au niveau d'une ouverture 33 traversant la toile et centrée sur l'un des cercles 31 et 32.

Dans le mode de réalisation représenté sur la figure 7, la section méridienne de la toile 29 présente une forme courbe et l'ouverture 33 comporte une partie externe 33a et une partie interne 33b de forme tronconique. Comme il sera expliqué plus loin, ces parties tronconiques permettent d'assurer une fixation du batteur dynamique 30 par l'intermédiaire de pièces d'appui et de serrage tronconiques.

Dans le cas de roues de wagons pour le transport de fret, dont la jante est susceptible de s'échauffer lors du freinage réalisé par des sabots, il est préférable de fixer les batteurs dynamiques 30 sur la toile 29 pour éviter un échauffement et une destruction de la partie en matériau élastique ou viscoélastique du batteur dynamique.

Le batteur 30 présente deux parties sensiblement identiques disposées de part et d'autre de la toile 29 et comportant chacune un disque massif en acier 34a (ou 34b), un amortisseur 35a (ou 35b) et des pièces d'adaptation et de serrage de forme tronconique 36a (ou 36b).

Les deux parties du batteur dynamique 30 sont reliées entre elles et fixées sur la toile 29 de la roue 26, par l'intermédiaire d'un boulon 40 sur lequel est vissé un écrou autobloquant 39 venant en appui sur l'un des disques massifs en acier 34a.

Les disques en acier 34a et 34b constituent la masse active du batteur dynamique 30 qui se trouve répartie des deux côtés de la toile 29.

La masse de chacun des disques en acier tels que 34a et 34b peut être, dans le cas du premier mode de réalisation représenté sur la figure 5, d'1 kg. La masse active de chacun des batteurs dynamiques est ainsi de 2 kg et la masse active totale des dix batteurs dynamiques de la roue est alors de 20 kg.

Dans le cas du second mode de réalisation représenté sur la figure 6, les masses des disques des cinq batteurs 30'a sont d'1 kg, de sorte que la masse active de chacun des batteurs dynamiques 30'a est de 2 kg. Les batteurs dynamiques 30'b comportent des disques massifs en acier dont la masse est de 2 kg, de sorte que la masse active de chacun des batteurs dynamiques 30'b est de 4 kg.

La masse de chacun des batteurs dynamiques qui est associé à un secteur d'angle d'ouverture 36° de la roue, par rapport à la masse du secteur de roue est significative, cette masse pouvant représenter de 5 à 10 % de la masse du secteur de la roue. Généralement, la masse active totale des batteurs dynamiques associés à une roue de wagon est comprise entre 10 et 20 kg.

Les batteurs dynamiques utilisés pour l'atténuation de chacune des fréquences de vibrations axiales de la roue sont en nombre impair, de façon à éviter une mise en vibration de ces batteurs en phase avec le voile de la roue qui se déforme de façon symétrique et qui comporte en conséquence un nombre pair de déformées.

Les éléments amortisseurs tels que 35a (ou 35b) comportent une pièce annulaire 37 en un matériau viscoélastique tel que le caoutchouc réalisée par moulage et assemblée lors du moulage à des pièces métalliques annulaires 38, 38' et 38" fixées contre les faces latérales externe et interne de la pièce annulaire 37 en caoutchouc et dans l'alésage central de la pièce annulaire 37.

Au montage, les amortisseurs 35a et 35b sont intercalés entre une partie d'appui d'un disque en acier 34a, 34b venant en contact avec la face latérale externe de l'amortisseur 35a et d'une pièce tronconique 36a (ou 36b) venant en appui contre une partie correspondante 33a (ou 33b) de l'ouverture 33 traversant le toile 29. On réalise ainsi une mise en appui parfaite des deux parties du batteur dynamique contre la toile 29 et un centrage de ces deux parties qui se trouvent centrées et alignées suivant la direction axiale 41 de l'ouverture 33, lors de leur assemblage en utilisant le boulon 40 engagé dans les ouvertures alignées des disques 34a et 34b et des amortisseurs 35a et 35b et dans l'ouverture 33 traversant la toile 29.

Les disques 34a et 34b comportent chacun une cavité circulaire ayant un fond plat et un diamètre égal au diamètre de la partie plane externe de l'élément métallique 38 de l'amortisseur 35a ou 35b qui est ainsi logé et centré dans le disque correspondant pour s'inscrire dans le gabarit de la roue.

Les batteurs dynamiques 30 sont réalisés de manière qu'ils présentent, lorsqu'il sont montés sur la toile 29 d'une roue de wagon, comme représenté sur la figure 7, une fréquence propre qui est égale à l'une des fréquences propres de vibrations axiales de la roue.

La fréquence est déterminée en particulier par la raideur de l'amortisseur 35a ou 35b, c'est-à-dire par la raideur du matériau viscoélastique 37.

La raideur du matériau viscoélastique et donc la fréquence propre des batteurs dynamiques peut être réglée de manière fine par réglage du serrage des amortisseurs 35a et 35b entre les disques en acier correspondants 34a ou 34b et les pièces tronconiques d'adaptation et de centrage 33a et 33b. Le réglage est réalisé par réglage du serrage de l'écrou 39.

L'utilisation de batteurs dynamiques répartis comme représenté sur les figures 5 et 6 permet de maintenir l'équilibrage de la roue et d'assurer une atténuation efficace des vibrations de la roue dans le mode axial, pour deux fréquences avec une adaptation en fréquence qui peut être réglée de manière fine sur chacun des batteurs dynamiques, de manière indépendante.

L'atténuation des vibrations est réalisée de la même manière que dans le cas des batteurs dynamiques en mode radial qui ont été décrits plus haut.

Le fait d'utiliser un nombre impair de batteurs dynamiques pour chacune des fréquences permet d'éviter une vibration des masses actives des batteurs dynamiques en phase avec la roue.

On a pu obtenir une atténuation acoustique de l'ordre de 5 à 10 dB(A).

De plus, les batteurs dynamiques qui ont été décrits peuvent supporter des températures variant dans un très large intervalle, entre les températures les plus basses et les températures les plus hautes auxquelles la roue peut être portée en service.

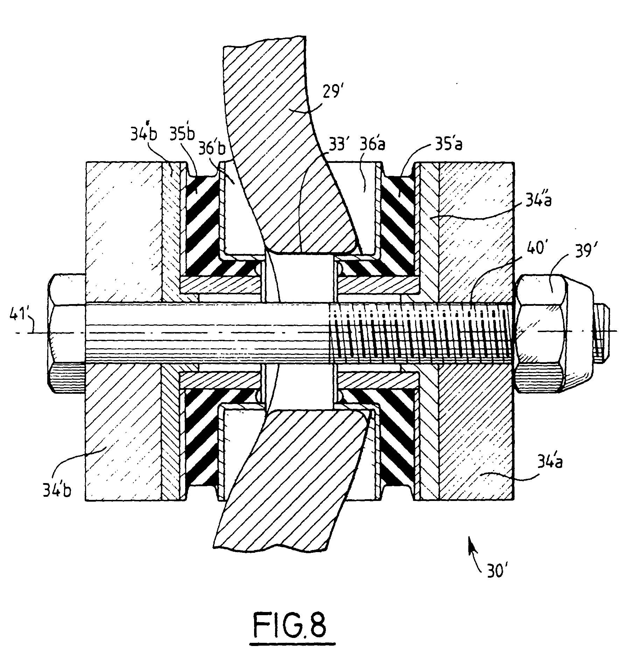

Sur la figure 8, on a représenté une variante de réalisation d'un batteur dynamique 30' qui est monté sur la toile 29' d'une roue de wagon, au niveau d'une ouverture 33' traversant la toile 29'.

Les amortisseurs 35'a et 35'b comportant en particulier une pièce annulaire en matériau viscoélastique tel que le caoutchouc sont identiques aux amortisseurs 35a et 35b utilisées dans le cas du batteur dynamique 30 représenté sur la figure 7.

A la différence du mode de réalisation représenté sur la figure 7, les pièces d'adaptation 36'a et 36'b intercalées entre les amortisseurs et la toile viennent en appui sur la face externe et sur la face interne respectivement de la toile 29' et non sur une partie tronconique de l'ouverture traversant la toile.

De plus, les disques 34'a et 34'b qui viennent en appui sur les amortisseurs 35'a et 35'b par l'intermédiaire d'une pièce d'appui 34"a ou 34"b peuvent être aisément changées, de manière à modifier ou à régler la masse active. Il suffit pour cela de remplacer la masse active 34'a ou 34'b par une pièce de section identique ayant une épaisseur différente dans la direction axiale 41' du boulon 40' de fixation et de serrage du batteur dynamique 30', par l'intermédiaire de l'écrou autobloquant 39'.

Dans tous les cas, le procédé et les batteurs dynamiques suivant l'invention permettent de réduire les vibrations en mode radial ou axial d'une roue de chemin de fer et donc les bruits de roulement de cette roue.

Le fait que la masse active des batteurs dynamiques est concentrée et présente une valeur significative par rapport à la masse de la roue permet d'obtenir une atténuation des vibrations dans un très large intervalle de fréquences.

Les batteurs dynamiques selon l'invention peuvent être facilement adaptés à toute roue de chemin de fer dont on a analysé les modes de vibration et dont a mesuré les fréquences propres de vibrations préalablement à la conception et au montage des batteurs dynamiques.

L'invention est également relative à une roue de chemin de fer insonorisée comportant des batteurs dynamiques suivant l'invention.

L'invention ne se limite pas aux modes de réalisation qui ont été décrits.

C'est ainsi qu'on peut imaginer des batteurs dynamiques dont la masse active ou l'élément élastique présente une forme différente de celles qui ont été décrites dans le cas de l'atténuation des vibrations en mode radial ou axial.

La fixation des batteurs dynamiques sur la roue peut être également réalisée d'une manière différente de celles qui ont été décrites.

L'élément de liaison entre la masse active du batteur dynamique et la roue, désigné comme élément élastique, peut être réalisé en tout matériau viscoélastique tel que le caoutchouc ou constitué par un assemblage d'éléments métalliques rigides et d'éléments élastiques ou viscoélastiques.

L'invention s'applique non seulement aux roues de voitures des trains à grande ou à très grande vitesse et aux roues de wagons de transport de fret mais encore à toute roue de chemin de fer dont il est souhaitable d'assurer l'insonorisation.

## Revendications

1. Procédé d'insonorisation d'une roue de chemin de fer (6, 16, 26) comprenant une jante (8, 18, 28) de roulement sur un rail, une toile (9, 19, 19', 29, 29') et un moyeu (7, 17, 27) **caractérisé en ce que** :
on définit par le calcul ou par des essais, au moins un mode de vibrations propre de la roue (6, 16, 26), soit dans la direction radiale, soit dans la direction axiale de la roue et on détermine au moins une fréquence de résonance de la roue pour ce mode de vibrations défini,
dans le cas d'un mode de vibrations axial, on détermine de plus le diamètre d'au moins un cercle (31, 32) centré sur l'axe de la roue sur lequel sont répartis des ventres de vibrations, ou diamètre nodal, et
on fixe sur la roue (6, 16, 26) au moins un élément vibrant (10a, 10b, 20, 30, 30'), appelé batteur dynamique, constitué d'une masse active (11a, 11b, 34a, 34b, 34'a, 34'b) d'une valeur significative par rapport à la masse d'une partie au moins de la roue (6, 16, 26) à laquelle est associé le batteur dynamique, reliée à la roue (6, 16, 26) par l'intermédiaire d'un élément élastique (12a, 12b, 12'a, 35a, 35'a, 35'b), le batteur dynamique ayant une fréquence propre de vibration égale à la fréquence de résonance de la roue pour le mode de vibration défini et étant fixé sur la roue (6, 16, 26) pour vibrer dans un mode identique au mode de vibration défini de la roue (6, 16, 26).

2. Procédé selon la revendication 1, **caractérisé en ce que** la masse active du batteur dynamique (10a, 10b, 20, 30, 30') dans le cas où l'on fixe un seul élément vibrant sur la roue (6, 16, 26) ou encore la somme des masses actives des batteurs dynamiques (10a, 10b, 30, 30') dans le cas où l'on fixe une pluralité de batteurs dynamiques sur la roue (6, 16, 26) est comprise entre 5% et 10 % de la masse de l'ensemble de la toile (9, 19, 19', 29, 29') et de la jante (8, 18, 28) de la roue (6, 16, 26).

3. Procédé selon l'une quelconque des revendications 1 et 2, **caractérisé par** le fait que l'élément élastique comporte au moins un matériau viscoélastique tel que le caoutchouc.

4. Procédé suivant l'une quelconque des revendications 1 à 3, **caractérisé en ce que** la masse active du batteur dynamique (10a, 10b, 20, 30, 30') est répartie circulairement autour de l'axe de la roue (6, 16, 26) de façon périodique, avec un nombre impair de périodes et de manière à conserver l'équilibrage de la roue (6, 16, 26).

5. Procédé suivant l'une quelconque des revendications 1 à 4, **caractérisé en ce qu'**on fixe au moins un batteur dynamique (10a, 10b, 20) sur la jante (8, 18) de la roue (6, 16), pour réaliser l'atténuation de vibrations de la roue (6, 16) dans un mode radial.

6. Procédé suivant l'une quelconque des revendications 1 à 4, **caractérisé en ce qu'**on fixe au moins un batteur dynamique (30, 30', 30'a, 30'b) sur la toile (29, 29') de la roue (26), sur un cercle dont le centre est situé sur l'axe de la roue (26) et dont le diamètre est égal à un diamètre nodal correspondant à une fréquence de résonance de la roue (26) dans un mode de vibration axial qui est égale à la fréquence propre de vibration du batteur dynamique (30a, 30b, 30'a, 30'b).

7. Procédé suivant l'une quelconque des revendications 1 à 6, **caractérisé en ce qu'**on détermine deux fréquences de résonance de la roue (6, 16, 26) pour un même mode de vibration (axial ou radial) et **en ce qu'**on fixe sur la roue deux batteurs dynamiques ou deux ensembles de batteurs dynamiques ayant pour l'un une fréquence propre égale à une première des deux fréquences de résonance et pour l'autre une fréquence propre égale à la seconde fréquence de résonance de la roue.

8. Roue de chemin de fer du type comprenant une jante de roulement (8, 18, 28, 28') sur un rail, une toile (9, 19, 29, 29'), un moyeu (7, 17, 27, 27'), et au moins un élément vibrant (10a, 10b, 20, 30, 30') appelé batteur dynamique, constitué d'une masse active d'une valeur significative par rapport à la masse d'une partie au moins de la roue à laquelle est associé le batteur dynamique, reliée à la roue par l'intermédiaire d'un élément élastique (12a, 12b, 22, 35a, 35b, 35'a, 35'b), **caractérisée en ce que** le batteur dynamique ayant une fréquence propre de vibration égale à la fréquence de résonance de la roue (6, 16, 26) pour un mode de vibration défini et étant fixé sur la roue (6, 16, 26) pour vibrer dans un mode identique au mode de vibration défini de la roue (6, 16, 26).

9. Roue de chemin de fer suivant la revendication 8, **caractérisée en ce que** le batteur dynamique (10a, 10b, 20) comporte une masse active (11a, 11b, 21) constituée par un anneau métallique et un élément élastique (12a, 12b, 22) de forme annulaire fixé sur la jante (8, 18) de la roue de chemin de fer pour assurer la liaison entre la masse active (10a, 10b, 21) et la roue de chemin de fer, de telle sorte que le batteur dynamique présente une fréquence de résonance dans un mode de vibration radial égale à une fréquence propre de la roue dans le mode de vibration radial.

10. Roue de chemin de fer suivant la revendication 9, **caractérisée en ce que** l'élément annulaire élastique est en caoutchouc.

11. Roue de chemin de fer suivant l'une quelconque des revendications 9 et 10, **caractérisée en ce que** l'anneau métallique (11a, 11b, 21) constituant la masse active présente un bord externe de forme circulaire et un bord interne présentant des ondulations de direction radiale successives dans la direction circonférentielle, de façon que l'anneau métallique présente un nombre impair de lobes en saillie dans la direction radiale dirigés vers l'axe de la roue de chemin de fer.

12. Roue de chemin de fer suivant l'une quelconque des revendications 9 à 11, **caractérisée en ce que** la jante (8, 18) comporte, sur sa surface interne dirigée vers l'axe de la roue, au moins une partie (14, 24) de forme annulaire de fixation de l'élément annulaire élastique (12a, 12b, 22) destinée à coopérer avec une partie de la surface externe de l'élément annulaire élastique (12a, 12b, 22) pour son maintien contre la surface intérieure de la jante (8, 18).

13. Roue de chemin de fer suivant la revendication 12, **caractérisée par** le fait qu'elle comporte de plus une clé (13a, 25) de fixation de l'élément élastique annulaire (12a, 12b, 22) contre la partie de fixation (14, 24) de la surface interne de la jante (18), la clé de fixation (13a, 22) de forme annulaire étant engagée dans un logement annulaire de la jante (8, 18) ou de l'élément élastique annulaire (12a, 12b, 22) de manière à assurer le serrage de l'élément élastique (12a, 12b, 22) contre la partie de fixation (14, 24) de la surface interne de la jante (8, 18).

14. Roue de chemin de fer suivant la revendication 13, **caractérisée par** le fait que l'anneau métallique (21) constituant la masse active comporte une partie annulaire d'engagement à l'intérieur d'une gorge (23) de l'élément élastique annulaire (22), la clé de serrage (25) étant engagée en force dans une gorge de l'élément élastique (22) pour assurer à la fois le serrage de l'élément élastique annulaire contre la partie de fixation (24) de la surface interne de la jante (18) et le serrage de la partie de fixation de l'anneau métallique (21) dans la gorge (23) de l'élément élastique annulaire (22).

15. Roue de chemin de fer suivant l'une quelconque des revendications 9 à 14, **caractérisée en ce qu'**elle comporte deux batteurs dynamiques (10a, 10b, 20) disposés de part et d'autre de la toile (9, 19) de la roue de chemin de fer, l'un des batteurs dynamiques ayant une fréquence propre égale à une première fréquence de résonance de la roue et l'autre batteur dynamique ayant une fréquence propre égale à une deuxième fréquence de résonance de la roue, dans le mode radial.

16. Roue de chemin de fer suivant la revendication 8, **caractérisée par** le fait qu'elle comporte une pluralité de batteurs dynamiques (30a, 30b, 30'a, 30'b) fixés sur la toile (29, 29') de la roue (26), dans des positions régulièrement espacées, sur au moins un cercle (31, 32) ayant son centre sur l'axe de la roue (26) et dont le diamètre est égal à un diamètre nodal correspondant à une fréquence propre de vibration de la roue dans un mode axial, chacun des batteurs dynamiques ayant une fréquence de résonance propre sensiblement égale à une fréquence de résonance de la roue dans le mode axial.

17. Roue de chemin de fer suivant la revendication 16, **caractérisée par** le fait que les batteurs dynamiques (30a, 30b, 30'a, 30'b) disposés sur un cercle (31, 32) centré sur l'axe de la roue et ayant pour diamètre un diamètre nodal pour une fréquence de la roue sont identiques et en nombre impair.

18. Roue de chemin de fer suivant la revendication 16, **caractérisée par** le fait que les batteurs dynamiques (30'a, 30'b) constituent un premier ensemble de batteurs (30'a) identiques disposé sur premier cercle (31) centré sur l'axe de la roue (26) ayant un diamètre égal à un diamètre nodal correspondant à une première fréquence de résonance de la roue dans un mode axial et un second ensemble de batteurs dynamiques identiques (30'a, 30'b) disposé sur un second cercle (32) centré sur l'axe de la roue (26) ayant pour diamètre un diamètre nodal pour une seconde fréquence de résonance de la roue (26) dans le mode axial, les batteurs dynamiques (30'a) du premier ensemble et les batteurs dynamiques (30'b) du second ensemble étant en nombre impair.

19. Roue de chemin de fer suivant l'une quelconque des revendications 16 à 18, **caractérisée en ce que** chacun des batteurs dynamiques (30, 30') comporte deux parties disposées de part et d'autre de la toile (29, 29') de la roue, au niveau d'une ouverture (33, 33') traversant la toile (29, 29'), chacune des parties des batteurs dynamiques (30, 30') étant constitué par trois éléments de forme annulaire : une masse active (34a, 34b, 34'a, 34'b), un élément élastique (35a, 35b, 35'a, 35'b) et une pièce d'adaptation (36a, 36b) et un élément mécanique (40, 40', 39, 39') d'assemblage et de fixation du batteur dynamique (30, 30') disposé de manière à traverser les alésages des éléments de forme annulaire du batteur dynamique (30, 30') et à travers l'ouverture (33) de la jante (29), assurant l'assemblage et la fixation des éléments du batteur dynamique (30, 30'), chacune des masses actives (34a, 34b) étant en contact avec un élément élastique correspondant (35a, 35b, 35'a, 35'b) qui est lui-même intercalé entre une masse active (34a, 34b, 34'a, 34'b) et une pièce d'adaptation (36a, 36b, 36'a, 36'b) en contact avec la toile (29, 29').

20. Roue de chemin de fer suivant la revendication 19, **caractérisée par** le fait que les masses actives (34a, 34b, 34'a, 34'b) sont constituées par des disques métalliques.

21. Roue de chemin de fer suivant l'une quelconque des revendications 19 et 20, **caractérisée par** le fait que les éléments élastiques annulaires (35a, 35b, 35'a, 35'b) sont constitués chacun sous la forme d'un amortisseur comportant une pièce annulaire en matériau viscoélastique (37) tel que le caoutchouc solidaire d'armatures métalliques de forme annulaire (38, 38', 38") comportant des surfaces d'appui de l'élément annulaire élastique (35a, 35b, 35'a, 35'b) sur une masse active (34a, 34b, 34'a, 34'b) et sur une pièce d'adaptation (36a, 36b, 36'a, 36'b).

22. Roue de chemin de fer suivant l'une quelconque des revendications 19, 20 et 21, **caractérisée par** le fait que l'élément mécanique (39, 40, 39', 40') d'assemblage et de fixation du batteur dynamique (30) est constitué par un boulon et un écrou dont le serrage permet de régler la raideur de l'élément élastique (35a, 35b, 35'a, 35'b) et la fréquence propre du batteur dynamique (30, 30').

23. Roue de chemin de fer suivant l'une quelconque des revendications 19 à 22, **caractérisée par** le fait que les pièces d'adaptation (26a, 36b, 36'a, 36'b) du batteur dynamique (30, 30') comportent des surfaces tronconiques destinées à coopérer avec des surfaces tronconiques correspondantes (33a, 33b) de l'ouverture (33) traversant la toile (29) de la roue de chemin de fer (26), pour assurer le centrage du batteur dynamique (30) dans l'ouverture (33) de la toile (29).

24. Roue de chemin de fer suivant l'une quelconque des revendications 19 à 23, **caractérisée en ce que** chacune des masses actives (34'a, 34'b) du batteur dynamique (30') comporte une partie (34"a, 34"b) d'adaptation et de centrage par rapport à l'élément élastique correspondant (35'a, 35'b) et une pièce de réglage de la masse, d'épaisseur déterminée en fonction d'une valeur de la masse active à atteindre venant en contact avec la partie d'adaptation et de centrage (34"a, 34"b).

25. Roue de chemin de fer suivant l'une quelconque des revendications 9 à 24, **caractérisée par** le fait que la masse active de l'au moins un batteur dynamique ou l'ensemble des masses actives du batteur dynamique présente une masse comprise entre 5 et 10 % de la masse de l'ensemble de la toile (9, 19, 19', 29, 29') et de la jante (8, 18, 28) de la roue de chemin de fer.

## Patentansprüche

1. Schalldämpfungsverfahren bei einem Eisenbahnrad (6, 16, 26) mit einem Radkranz (8, 18, 28) zum Rollen auf einer Schiene, einer Scheibe (9, 19, 19', 29, 29') und einer Nabe (7, 17, 27), **dadurch gekennzeichnet, daß**:
durch Berechnen oder durch Versuche mindestens ein Eigenschwingungs-Modus des Rades (6, 16, 26), entweder in Radialrichtung oder in Axialrichtung des Rades, definiert wird und mindestens eine Resonanzfrequenz des Rades für diesen definierten Schwingungsmodus ermittelt wird,
im Fall eines Axial-Schwingungs-Modus außerdem der Durchmesser von mindestens einem auf der Achse des Rades zentrierten Kreis (31, 32), auf dem Schwingungsbäuche angeordnet sind, oder der Knotenpunktsdurchmesser, ermittelt wird,
an dem Rad (6, 16, 26) mindestens ein dynamischer Schlegel genanntes Schwingungselement (10a, 10b, 20, 30, 30') befestigt wird, das aus einer aktiven Masse (11a, 11b, 34a, 34b, 34'a, 34'b) gebildet ist, die bezüglich der Masse eines Teils zumindest des Rades (6, 16, 26), mit dem der dynamische Schlegel verbunden ist, einen erheblichen Wert hat, und die mittels eines zwischenliegenden elastischen Elements (12a, 12b, 12'a, 35a, 35'a, 35'b) mit dem Rad (6, 16, 26) verbunden ist, wobei der dynamische Schlegel eine Schwingungs-Eigenfrequenz hat, die gleich der Resonanzfrequenz des Rades für den definierten Schwingungsmodus ist, und so an dem Rad (6, 16, 26) befestigt ist, **daß** er in einem Modus schwingen kann, der mit dem definierten Schwingungsmodus des Rades (6, 16, 26) identisch ist.

2. Verfahren nach Anspruch 1, **dadurch gekennzeichnet, daß** die aktive Masse des dynamischen Schlegels (10a, 10b, 20, 30, 30'), falls an dem Rad (6, 16, 26) ein einziges Schwingungselement befestigt wird, oder aber die Summe der aktiven Massen der dynamischen Schlegel (10a, 10b, 20, 30, 30'), falls an dem Rad (6, 16, 26) eine Mehrzahl von dynamischen Schlegeln befestigt wird, zwischen 5% und 10% der Masse der Anordnung aus der Scheibe (9, 19, 19', 29, 29') und dem Radkranz (8, 18, 28) des Rades (6, 16, 26) beträgt.

3. Verfahren nach einem der Ansprüche 1 und 2, **dadurch gekennzeichnet, daß** das elastische Element mindestens ein viskoelastisches Material wie zum Beispiel Kautschuk aufweist.

4. Verfahren nach einem der Ansprüche 1 bis 3, **dadurch gekennzeichnet, daß** die aktive Masse des dynamischen Schlegels (10a, 10b, 20, 30, 30') in periodischer Weise, mit einer ungeraden Anzahl von Perioden, und derart, **daß** die Auswuchtung des Rades (6, 16, 26) erhalten bleibt, kreisförmig um die Achse des Rades (6, 16, 26) verteilt ist.

5. Verfahren nach einem der Ansprüche 1 bis 4, **dadurch gekennzeichnet, daß** an dem Radkranz (8, 18) des Rades (6, 16) mindestens ein dynamischer Schlegel (10a, 10b, 20) befestigt wird, um bei dem Rad (6, 16) eine Schwingungsdämpfung in einem Radial-Modus zu bewirken.

6. Verfahren nach einem der Ansprüche 1 bis 4, **dadurch gekennzeichnet, daß** an der Scheibe (29, 29') des Rades (26) mindestens ein dynamischer Schlegel (30, 30', 30'a, 30'b) befestigt wird, und zwar auf einem Kreis, dessen Mittelpunkt auf der Achse des Rades (26) angeordnet ist und dessen Durchmesser gleich einem Knotenpunktsdurchmesser ist, der einer Resonanzfrequenz des Rades (26) in einem Axial-Schwingungs-Modus zugeordnet ist, die gleich der Schwingungs-Eigenfrequenz des dynamischem Schlegels (30a, 30b, 30'a, 30'b) ist.

7. , Verfahren nach einem der Ansprüche 1 bis 6, **dadurch gekennzeichnet, daß** für einen gleichen Schwingungsmodus (axial oder radial) zwei Resonanzfrequenzen des Rades (6, 16, 26) ermittelt werden, und **daß** an dem Rad zwei dynamische Schlegel oder zwei Anordnungen von dynamischen Schlegeln befestigt werden, von denen einer eine Eigenfrequenz hat, die gleich einer ersten der beiden Resonanzfrequenzen ist, und der andere eine Eigenfrequenz hat, die gleich der zweiten Resonanzfrequenz des Rades ist.

8. Eisenbahnrad mit einem Radkranz (8, 18, 28, 28') zum Rollen auf einer Schiene, einer Scheibe (9, 19, 29, 29'), einer Nabe (7, 17, 27, 27') und mindestens einem dynamischer Schlegel genannten Schwingungselement (10a, 10b, 20, 30, 30'), das aus einer aktiven Masse gebildet ist, die bezüglich der Masse eines Teils zumindest des Rades, mit dem der dynamische Schlegel verbunden ist, einen erheblichen Wert hat, und die mittels eines zwischenliegenden elastischen Elements (12a, 12b, 22, 35a, 35b, 35'a, 35'b) mit dem Rad verbunden ist, **dadurch gekennzeichnet, daß** der dynamische Schlegel eine Schwingungs-Eigenfrequenz hat, die gleich der Resonanzfrequenz des Rades (6, 16, 26) für einen definierten Schwingungsmodus ist, und so an dem Rad (6, 16, 26) befestigt ist, **daß** er in einem Modus schwingen kann, der mit dem definierten Schwingungsmodus des Rades (6, 16, 26) identisch ist.

9. Eisenbahnrad nach Anspruch 8, **dadurch gekennzeichnet, daß** der dynamische Schlegel (10a, 10b, 20) eine aktive Masse aufweist, die aus einem Metallring und einem ringförmigen elastischen Element (12a, 12b, 22) gebildet ist, das an dem Radkranz (8, 18) des Eisenbahnrades befestigt ist, um die Verbindung zwischen der aktiven Masse (10a, 10b, 21) und dem Eisembahnrad zu gewährleisten, so **daß** der dynamische Schlegel in einem Radial-Schwingungs-Modus eine Resonanzfrequenz aufweist, die gleich einer Eigenfrequenz des Rades in dem Radial-Schwingungs-Modus ist.

10. Eisenbahnrad nach Anspruch 9, **dadurch gekennzeichnet, daß** das ringförmige elastische Element aus Kautschuk ist.

11. , Eisenbahnrad nach einem der Ansprüche 9 und 10, **dadurch gekennzeichnet, daß** der Metallring (11a, 11b, 21), von dem die aktive Masse gebildet wird, einen ringförmigen äußeren Rand und einen inneren Rand mit in Umfangsrichtung aufeinanderfolgenden, radial ausgerichteten Wellen aufweist, so **daß** der Metallring in der Radialrichtung eine ungerade Anzahl von zur Achse des Eisenbahnrades hin gerichteten vorspringenden Ausbuchtungen aufweist.

12. Eisenbahnrad nach einem der Ansprüche 9 bis 11, **dadurch gekennzeichnet, daß** der Radkranz (8, 18) an seiner zur Radachse gerichteten Innenfläche mindestens einen ringförmigen Teil (14, 24) zur Befestigung des elastischen ringförmigen Elements (12a, 12b, 22) aufweist, der dazu bestimmt ist, mit einem Teil der Außenfläche des elastischen ringförmigen Elements (12a, 12b, 22) zusammenzuwirken, um dieses gegen die Innenfläche des Radkranzes (8, 18) zu halten,

13. Eisenbahnrad nach Anspruch 12, **dadurch gekennzeichnet, daß** es weiter ein Fixierteil (13a, 25) zur Befestigung des ringförmigen elastischen Elements (12a, 12b, 22) gegen den Befestigungsteil (14, 24) der Innenfläche des Radkranzes (18) aufweist, wobei das ringförmige Fixierteil (13a, 22) mit einer ringförmigen Aufnahme des Radkranzes (8, 18) oder des ringförmigen elastischen Elements (12a, 12b, 22) derart im Eingriff ist, **daß** gewährleistet ist, **daß** das elastische Element (12a, 12b, 22) gegen den Befestigungsteil (14, 24) der Innenfläche des Radkranzes (8, 18) gehalten ist.

14. Eisenbahnrad nach Anspruch 13, **dadurch gekennzeichnet, daß** der Metallring (21), von dem die aktive Masse gebildet ist, einen ringförmigen Teil zum Eingreifen in eine Nut (23) des ringförmigen elastischen Elements (22) aufweist, wobei das Fixierteil (25) kraftschlüssig in eine Nut des elastischen Elements (22) eingreift, um sicherzustellen, **daß** das ringförmige elastische Element gegen den Befestigungsteil (24) der Innenfläche des Radkranzes (18) festgelegt wird, und zugleich, **daß** der Befestigungsteil des Metallrings (21) in der Nut (23) des ringförmigen elastischen Elements (22) festgelegt wird.

15. Eisenbahnrad nach einem der Ansprüche 9 bis 14, **dadurch gekennzeichnet, daß** es zwei dynamische Schlegel (10a, 10b, 20) aufweist, die beiderseits der Scheibe (9, 19) des Eisenbahnrades angeordnet sind, wobei hinsichtlich des Radialmodus der eine dynamische Schlegel eine Eigenfrequenz hat, die gleich einer ersten Resonanzfrequenz des Rades ist, und der andere dynamische Schlegel eine Eigenfrequenz hat, die gleich einer zweiten Resonanzfrequenz des Rades ist.

16. Eisenbahnrad nach Anspruch 8, **dadurch gekennzeichnet, daß** es eine Mehrzahl von dynamischen Schlegeln (30a, 30b, 30'a, 30'b) aufweist, die an der Scheibe (29, 29') des Rades (26) befestigt sind, und zwar an in regelmäßigen Abständen vorgesehenen Positionen auf mindestens einem Kreis (31, 32), dessen Mittelpunkt auf der Achse des Rades (16) liegt und dessen Durchmesser gleich einem Knotenpunktsdurchmesser ist, der einer Schwingungs-Eigenfrequenz des Rades in einem Axial-Modua zugeordnet ist, wobei jeder der dynamischen Schlegel eine Resonanz-Eigenfrequenz hat, die im wesentlichen gleich einer Resonanzfrequenz des Rades in dem Axial-Modus ist.

17. Eisenbahnrad nach Anspruch 16, **dadurch gekennzeichnet, daß** die dynamischen Schlegel (30a, 30b, 30'a, 30'b), die auf einem Kreis (31, 32) angeordnet sind, der zur Achse des Rades zentriert ist und als Durchmesser einen Knotenpunktsdurchmesser für eine Frequenz des Rades hat, identisch sind und in einer ungeraden Anzahl vorgesehen sind.

18. Eisenbahnrad nach Anspruch 16, **dadurch gekennzeichnet, daß** die dynamischen Schlegel (30'a, 30'b) eine erste Anordnung von identischen Schlegeln (30'a) bilden, die auf einem ersten Kreis (31) angeordnet sind, der zur Achse des Rades (26) zentriert ist und einen Durchmesser hat, der gleich einem Knotenpunktsdurchmesser ist, der einer ersten Resonanzfrequenz des Rades in einem Axial-Modus zugeordnet ist, sowie eine zweite Anordnung von identischen dynamischen Schlegeln (30'a, 30'b) bilden, die auf einem zweiten Kreis (32) angeordnet sind, der zur Achse des Rades (26) zentriert ist und als Durchmesser einen Knotenpunktsdurchmesser für eine zweite Resonanzfrequenz des Rades (26) in dem Axial-Modus hat, wobei die dynamischen Schlegel (30'a) der ersten Anordnung und die dynamischen Schlegel (30'b) der zweiten Anordnung in einer ungeraden Anzahl vorgesehen sind.

19. Eisenbahnrad nach einem der Ansprüche 16 bis 18, **dadurch gekennzeichnet, daß** jeder der dynamischen Schlegel (30, 30') zwei Teile aufweist, die beiderseits der Scheibe (29, 29') des Rades auf Höhe einer sich quer durch die Scheibe (29, 29') hindurch erstreckenden Öffnung (33, 33') angeordnet sind, wobei jeder der Teile des dynamischen Schlegels (30, 30') aus drei ringförmigen Elementen gebildet ist: einer aktiven Masse (34a, 34b, 34'a, 34'b), einem elastischen Element (35a, 35b, 35'a, 35'b) und einem Anpassungsstück (36a, 36b), wobei ein mechanisches Element (40, 40', 39, 39') zum Zusammensetzen und Befestigen des dynamischen Schlegels (30, 30') derart angeordnet ist, **daß** es sich durch die Bohrungen der ringförmigen Elemente des dynamischen Schlegels (30, 30') und durch die Öffnung (33) des Radkranzes (29) hindurch erstreckt, wodurch das Zusammensetzen und die Befestigung der Elemente des dynamischen Schlegels (30, 30') gewährleistet ist, wobei jede der aktiven Massen (34a, 34b) mit einem zugehörigen elastischen Element (35a, 35b, 35'a, 35'b) in Kontakt ist, das seinerseits zwischen eine aktive Masse (34a, 34b, 34'a, 34'b) und ein mit der Scheibe (29, 29') in Kontakt stehendes Anpassungsstück (36a, 36b, 36'a, 36'b) eingefügt ist.

20. Eisenbahnrad nach Anspruch 19, **dadurch gekennzeichnet, daß** die aktiven Massen (34a, 34b, 34'a, 34'b) von Metallscheiben gebildet sind.

21. Eisenbahnrad nach einem der Ansprüche 19 und 20, **dadurch gekennzeichnet, daß** die ringförmigen elastischen Elemente (35a, 35b, 35'a, 35'b) jeweils in Form eines Dämpfers ausgebildet sind, der ein ringförmiges Stück aus einem viakoelastischen Material (37), wie zum Beispiel Kautschuk, aufweist, das mit ringförmigen Metallbeschlägen (38, 38', 38") verbunden ist, die Flächen aufweisen, mit denen das ringförmige elastische Element (35a, 35b, 35'a, 35'b) an einer aktiven Masse (34a, 34b, 34'a, 34'b) und an einem Anpassungsstück (36a, 36b, 36'a, 36'b) ansteht.

22. , Eisenbahnrad nach einem der Ansprüche 19, 20 und 21, **dadurch gekennzeichnet, daß** das mechanische Element (39, 40, 39', 40') zum Zusammensetzen und Befestigen des dynamischen Schlegels (30) aus einer Schraube und einer Mutter gebildet ist, deren Festziehen es erlaubt, die Steifheit des elastischen Elements (35a, 35b, 35'a, 35'b) und die Eigenfrequenz des dynamischen Schlegels (30, 30') einzustellen.

23. Eisenbahnrad nach einem der Ansprüche 19 bis 22, **dadurch gekennzeichnet, daß** die Anpassungsstücke (36a, 36b, 36'a, 36'b) des dynamischen Schlegels (30, 30') kegelstumpfförmige Flächen aufweisen, die zum Zusammenwirken mit zugehörigen kegeistumpfförmigen Flächen (33a, 33b) der sich durch die Scheibe (29) des Eisenbahnrades (26) hindurch erstreckenden Öffnung vorgesehen sind, um die Zentrierung des dynamischen Schlegels (30) in der Öffnung (33) der Scheibe (29) zu gewährleisten.

24. Eisenbahnrad nach einem der Ansprüche 19 bis 23, **dadurch gekennzeichnet, daß** jede der aktiven Massen (34'a, 34'b) des dynamischen Schlegels (30') einen Teil (34"a, 34"b) zum Anpassen und Zentrieren bezüglich des zugehörigen elastischen Elements (35'a, 35'b) und ein Stück zum Einstellen der Masse aufweist, das eine Dicke hat, die in Abhängigkeit von einem Wert der aktiven Masse so bestimmt ist, **daß** erreicht wird, **daß** dasselbe mit dem Teil zum Anpassen und Zentrieren (34"a, 34"b) in Kontakt gelangt.

25. Eisenbahnrad nach einem der Ansprüche 9 bis 24, **dadurch gekennzeichnet, daß** die aktive Masse des mindestens einen dynamischen Schlegels oder die Anordnung der aktiven Massen des dynamischen Schlegels eine Masse aufweist, die zwischen 5% und 10% der Masse der Anordnung aus der Scheibe (9, 19, 19', 29, 29') und dem Radkranz (8, 18, 28) des Eisenbahnrades beträgt.

## Claims

1. A method of sound damping of a railway wheel (6, 16, 26) comprising a rim (8, 18, 28) rolling on a rail, a central flange (9, 19, 19', 29, 29') and a means (7, 17, 27) **characterised by**:
defining by calculation or by tests at least one mode of natural vibration of the wheel (6, 16, 26), either in the radial direction or in the axial direction of the wheel and determining at least one frequency of resonance of the wheel for the defined mode of vibration,
in the case of a mode of axial vibration, determining also the diameter of at least one circle (31, 32) centred on the axis of the wheel on which are distributed the antinodes of the vibrations, or a nodal diameter, and
fixing on the wheel (6, 16, 26) at least one vibrating element (10a, 10b, 20, 30, 30') called a dynamic damper, comprising an active mass (11a, 11b, 34a, 34b, 34'a, 34'b) of a significant value relative to the mass of at least one part of the wheel (6, 16, 26) with which the dynamic damper is associated, connected to the wheel (6, 16, 26) by means of an elastic element (12a, 12b, 12'a, 35a, 35'a, 35'b), the dynamic damper having a natural frequency of vibration equal to the frequency of resonance of the wheel for the defined mode of vibration and being fixed to the wheel (6, 16, 26) for vibration in a mode identical to the defined mode of vibration of the wheel (6, 16, 26).

2. Method according to Claim 1, **characterised in that** the active mass of the dynamic damper (10a, 10b, 20, 30, 30') in the case where a single vibrating element is fixed to the wheel or where the sum of the active masses of the dynamic dampers (10a, 10b, 30, 30') in the case where a plurality of dynamic dampers are fixed to the wheel (6, 16, 26) comprises between 5% and 10% of the mass of the flange (9, 19, 19', 29, 29') and of the rim (8, 18, 28) of the wheel (6, 16, 26) taken together.

3. Method according to any one of Claims 1 and 2, **characterised in that** the elastic element includes at least one viscoelastic material such as rubber.

4. Method according to any one of Claims 1 to 3, **characterised in that** the active mass of the dynamic damper (10a, 10b, 20, 30, 30') is distributed on a circle about the axis of the wheel (6, 16, 26) in a periodic manner, with an odd number of periods and in a manner to conserve the balancing of the wheel (6, 16, 26).

5. Method according to any one of Claims 1 to 4, **characterised in that** at least one dynamic damper (10a, 10b, 20) is fixed to the rim (8, 18) of the wheel (6, 16) to achieve the attenuation of vibrations of the wheel (6, 16) in a radial mode.

6. Method according to any one of Claims 1 to 4, **characterised in that** at least one dynamic damper (30, 30', 30'a, 30'b) is fixed to the flange (29, 29') of the wheel (26,) on a circle whose centre is situated on the axis of the wheel (26) and whose diameter is equal to a nodal diameter corresponding to a frequency of resonance of the wheel (26) in an axial mode of vibration which is equal to the natural frequency of vibration of the dynamic damper (30a, 30b, 30'a, 30'b).

7. Method according to any one of Claims 1 to 6, **characterised in that** two frequencies of resonance of the wheel (6, 16, 26) are determined for the same mode of vibration (axial or radial) and **in that** two dynamic dampers or two assemblies of dynamic dampers are fixed to the wheel, where one has a natural frequency equal to a first of the two frequencies of resonance and for the other has a natural frequency equal to the second frequency of resonance of the wheel.

8. A railway wheel of the type comprising a rim (8, 18, 28, 28') for rolling on a rail, a flange (9, 19, 29, 29'), a means (7, 17, 27, 27') and at least one vibrating element (10a, 10b, 20, 30, 30') called a dynamic damper, and comprising an active mass having a significant value relative to the mass of at least one part of the wheel with which the dynamic damper is associated and connected to the wheel by means of an elastic element (12a, 12b, 22, 35a, 35b, 35'a, 35'b), **characterised in that** the dynamic damper has a natural frequency of vibration equal to the frequency of resonance of the wheel (6, 16, 26), for a defined mode of vibration and is fixed to the wheel (6, 16, 26), to vibrate in a mode identical to the defined mode of vibration of the wheel (6, 16, 26).

9. Railway wheel according to Claim 8, **characterised in that** the dynamic damper (10a, 10b, 20) comprises an active mass (11a, 11b, 21), formed by a metal ring and an elastic element (12a, 12b, 22) of annular form fixed on the rim (8, 18) of the railway wheel to ensure the connection between the active mass (10a, 10b, 21) and the railway wheel, in such a way that the dynamic damper has a frequency of resonance in a radial mode of vibration equal to the natural frequency of the wheel in the radial mode of vibration.

10. Railway wheel according to Claim 9, **characterised in that** the annular elastic element is of rubber.

11. Railway wheel according to any one of Claims 9 and 10, **characterised in that** the metal ring (11a, 11b, 21), comprising the active mass has an outer edge of circular form and an inner edge having undulations in a radial direction alternating with undulations in a circumferential direction, such that the metal ring has an odd number of lobes projecting in the radial direction directed towards the axis of the railway wheel.

12. Railway wheel according to any one of Claims 9 to 11, **characterised in that** the rim (8, 18) includes, on its internal surface directed towards the axis of the wheel, at least one fixing part (14, 24) of annular form for the annular elastic element (12a, 12b, 22), being adapted to co-operate with one part of the external surface of the annular elastic element (12a, 12b, 22) for retaining it against the interior surface of the rim (8, 18).

13. Railway wheel according to Claim 12, **characterised in that** it also includes a fixing key (13a, 25) for fixing the annular elastic element (12a, 12b, 22) against the fixing part (14, 24) of the internal surface of the rim (18), the fixing key (13a, 22) being of annular form and engaging in an annular recess in the rim (8, 18) or of the annular elastic element (12, 12b, 22) in a manner to ensure the clamping of the elastic element (12a, 12b, 22) against the fixing part (14, 24) of the internal surface of the rim (8, 18).

14. Railway wheel according to Claim 13 **characterised in that** the metal ring (21) comprising the active mass includes an annular part for engagement with the interior of a groove (23) in the elastic element (22), the clamping key (25) being forcibly engaged in a groove on the elastic element (22), to ensure at the time the clamping of the annular elastic element against the fixing part (24) of the internal surface of the rim (18) and the clamping of the fixing part of the metal ring (21) in the groove (23) of the annular elastic element (22).

15. Railway wheel according to any one of Claims 9 to 14, **characterised in that** it includes two dynamic dampers (10a, 10b, 20) arranged one on each side of the flange (9, 19) of the railway wheel, one of the dynamic dampers having a natural frequency equal to a first frequency of resonance of the wheel and the other dynamic damper having a natural frequency equal to a second frequency of resonance of the wheel, in the radial mode.

16. Railway wheel according to Claim 8, **characterised in that** it includes a plurality of dynamic dampers (30a, 30b, 30'a, 30'b) fixed on the flange (29, 29') of the wheel (26), in regularly spaced positions, on at least one circle (31, 32) having its centre on the axis of the wheel (26), and of which the diameter is equal to a nodal diameter corresponding to a natural frequency of vibration of the wheel in an axial mode, each of the dynamic dampers having a natural frequency of resonance substantially equal to a frequency of resonance of the wheel in the axial mode.

17. Railway wheel according to Claim 16, **characterised in that** there are an odd number of identical dynamic dampers (30a, 30b, 30'a, 30'b) arranged on a circle (31, 32) centred on the axis of the wheel and having as a diameter a nodal diameter for a frequency of the wheel.

18. Railway wheel according to Claim 16, **characterised in that** the dynamic dampers (30'a, 30'b) form a first assembly of identical dampers (30'a) arranged on a first circle (31) centred on the axis of the wheel and having a diameter equal to a nodal diameter corresponding to a first frequency of resonance of the wheel in an axial mode and a second assembly of identical dynamic dampers (30'a, 30'b) arranged on a second circle (32) centred on the axis of the wheel (26) and having as a diameter a nodal diameter for a second frequency of resonance of the wheel (26) in the axial mode, the dynamic dampers (30'a) of the first assembly and the dynamic dampers (30'b) of the second assembly being an odd number.

19. Railway wheel according to any one of Claims 16 to 18, **characterised in that** each of the dynamic dampers (30, 30') includes two portions arranged one on each side of the flange (29, 29'), of the wheel, at the level of an opening (33, 33') through the flange (29, 29'), each portion of the dynamic dampers (30, 30') being constituted by three members of annular form: an active mass (34a, 34b, 34'a, 34'b), an elastic element (35a, 35b, 35'a, 35'b) and an adjustment piece (36a, 36b), and a mechanical member (40, 40', 39, 39') for assembling and fixing the dynamic damper (30, 30') arranged to pass through the bores of the annular elements of the dynamic damper (30, 30') and the opening (33) in the rim (29), ensuring assembly and fixing of the element of the dynamic damper (30, 30'), each of the active masses (34a, 34b) being in contact with a corresponding elastic element (35a, 35b, 35'a, 35'b) which is itself inserted between an active mass (34a, 34b, 34'a, 34'b) and an adjusting piece (36a, 36b, 36'a, 36'b) in contact with the flange (29, 29').

20. Railway wheel according to Claim 19, **characterised in that** the active masses (34a, 34b, 34'a, 34'b) comprise metal discs.

21. Railway wheel according to any one of Claims 19 and 20, **characterised in that** the annular elastic elements (35a, 35b, 35'a, 35'b) are each made in the form of a damper comprising an annular element of viscoelastic material (37) such as rubber integral with annular metal brackets (38, 38', 38") comprising support surfaces of the annular elastic element (35a, 35b, 35'a, 35'b) on an active mass (34a, 34b, 34'a, 34'b) and on an adjusting piece (36a, 36b, 36'a, 36'b).

22. Railway wheel according to any one of Claims 19, 20 and 21, **characterised in that** the mechanical element (39, 40, 39', 40') for assembling and fixing the dynamic damper (30) comprises a nut and bolt whose clamping allows adjustment of the stiffness of the elastic element (35a, 35b, 35'a, 35'b) and the natural frequency of the dynamic damper (30, 30').

23. Railway wheel according to any one of Claims 19 to 22, **characterised in that** the adjustment pieces (26a, 36b, 36'a, 36'b) of the dynamic damper (30, 30') comprise frusto-conical surfaces adapted for co-operation with corresponding frusto-conical surfaces (33a, 33b) of the opening (33) through the flange (29) of the railway wheel (26), to ensure that the dynamic damper (30) is centred in the opening (33) in the flange (29).

24. Railway wheel according to one of Claims 19 to 23, **characterised in that** each of the active masses (34'a, 34'b) of the dynamic damper (30') comprises a member (34"a, 34") for adjustment and centring relative to the corresponding elastic element (35'a, 35'b) and an adjusting piece for the mass, whose thickness is determined as the function of a value of the active mass achieved on coming into contact with the part for adjustment and centring (34", 34"b).

25. Railway wheel according to one of Claims 9 to 24, **characterised in that** the active mass of at least one dynamic damper or the assembly of active masses of the dynamic damper has a mass of between 5 and 10% of the mass of the flange (9, 19, 19' 29, 29') and the rim (8, 18, 28) of the railway wheel taken together.
